# EUROPEAN PATENT APPLICATION

(11) **EP 1 054 398 A2**
(43) Date of publication of application: **22.11.2000**
(21) Application number: 00107981.3
(22) Date of filing: 18.04.2000
(51) Int. Cl.: G11B 20/00, G06F 1/00, G06F 12/14

(54) **Contents information recording method and contents information recording unit**

(30) Priority: 21.05.1999 JP 14126999
(71) Applicant: VICTOR COMPANY OF JAPAN, LTD., Yokohama-shi Kanagawa 221 (JP)
(72) Inventor: Sugahara, Takayuki, Yokosuka-shi, Kanagawa-ken (JP)
(74) Representative: HOFFMANN - EITLE

(57) **Abstract**

Enciphered contents information enciphered with a predetermined contents key is recorded from a medium A to a medium B. At this time, an ID(B) of a copy destination medium B is read on the medium A and first enciphered key information enciphered with the ID(A) is deciphered on the medium A. Then, on the medium A, the deciphered information is reenciphered according to ID of the copy destination medium so as to obtain second enciphered key information and this second enciphered key information is sent to the medium B. Alternatively, the first enciphered key information is outputted from the medium A to the copy destination medium B. On the medium B, the first enciphered key information is deciphered with ID(A) of the copy source medium A obtained from the medium A, that deciphered information is reenciphered with the ID(B) of the medium B so as to obtain second enciphered key information and then that second enciphered key information is recorded in the medium B.

## Description

### BACKGROUND OF THE INVENTION

### 1. Field of the Invention

The present invention relates to a contents information distribution system for recording and reproducing contents information.

The present invention aims to provide contents information recording method and contents information recording unit in contents information distribution system which distributes contents information (particularly audio or video data) and enables user to transfer and reproduce data between media while preventing illegal transfer and duplication of the distributed data.

### 2. Description of the Background Art

With a progress of enciphering technology, digital contents distribution management method, digital contents reproduction method and apparatus therefor have been proposed in Japanese Patent Application Laid-Open No. 10-269289 as an effective method for distributing audio or video digital data through network. According to the present invention, a distribution side of digital contents processes and compresses digital contents and sends the processed digital contents, enciphered contents key and enciphered accounting information to communication receivers. Money collected based on contents use information sent from the communication receivers is distributed to privilege persons. On the other hand, a digital contents reproducing side deciphers that processed digital contents with the contents key and simultaneously expands it to reproduce the original data. Then, data on charge money depending on use of the contents and contents use information are sent to the contents information distribution side. The recorded contents can be carried away to other places.

Further, Japanese Patent Application Laid-Open No. 10-283268 has disclosed an information recording media, recording unit, information transmission system and deciphering unit. The information recording media of the present invention contains enciphered information and enciphered key information obtained by enciphering key information for deciphering this enciphered information to its original information. Further, it contains condition information for deciphering the aforementioned enciphered information in a non-enciphered state. That is, because device information and region information are included in control information of the enciphered key information, duplication of the enciphered information into HDD or optical disk on user side for illegal use is prevented.

However, according to the above described conventional method, the contents data recorded in media cannot be transferred or duplicated between users (although the media itself can be transferred, the contents data recorded in that media cannot be reproduced properly). Therefore, to obtain the contents data, user has to connect to accounting control center, data control center or the like. Another problem is that when a user has plural media, he cannot move data between different media.

Although when the contents data is deciphered and transmitted, the contents data can be transferred or duplicated between media, however, it happens that illegal transfer or duplication may be made possible so that the security on data transmission is lost.

### SUMMARY OF THE INVENTION

Accordingly, an object of the present invention is to provide contents information recording method and contents information recording unit in contents information distribution system which distributes contents information and enables user to transfer and reproduce data between media while preventing illegal transfer and duplication of the distributed data.

To achieve the above object, there is provided a contents information recording method comprising, when contents information is recorded from a first medium, in which first enciphered contents information is recorded, the first enciphered contents information being obtained by enciphering the contents information with information about ID of the first medium as an ID key, to a second medium: outputting the first enciphered contents information from the first medium to the second medium; and, on the second medium, deciphering the first enciphered contents information according to information about ID of the first medium obtained from the first medium, and recording second enciphered contents information, which is obtained by reenciphering the contents information with information about the ID of the second medium as an ID key, in the second medium.

Further, to achieve the above object, there is provided a contents information recording method comprising, when contents information is recorded from a first medium, in which first enciphered contents information is recorded, the first enciphered contents information being obtained by enciphering the contents information with information about ID of the first medium as an ID key, to a second medium: on the first medium, deciphering the first enciphered contents information, reenciphering the contents information with information about the ID of the second medium obtained from the second medium as the ID key so as to obtain second enciphered contents information and outputting the second enciphered contents information to the second medium; and, on the second medium, recording the second enciphered contents information into the second medium.

Further, to achieve the above object, there is provided a contents information recording method wherein, when contents information is recorded from a first medium, in which a first enciphered contents information is recorded, the first enciphered contents information being obtained by enciphering the contents information with information about ID of the first medium as an ID key, to a second medium, any one of the following methods {a} and {b} is selected; method {a}: outputting the first enciphered contents information from the first medium to the second medium; and, on the second medium, deciphering the first enciphered contents information according to information about ID of the first medium obtained from the first medium, and recording second enciphered contents information, which is obtained by reenciphering the contents information with information about the ID of the second medium as an ID key, in the second medium, method {b}: on the first medium, deciphering the first enciphered contents information, reenciphering the contents information with information about the ID of the second medium obtained from the second medium as the ID key so as to obtain second enciphered contents information and outputting the second enciphered contents information to the second medium; and, on the second medium, recording the second enciphered contents information into the second medium.

According to a preferred embodiment of the present invention, the ID key for the first enciphered contents information is a common key using the ID of the first medium as it is or a common key using information obtained by converting the ID of the first medium according to a predetermined function; and the ID key for the second enciphered contents information is a common key using the ID of the second medium as it is or a common key using information obtained by converting the ID of the second medium according to a predetermined function.

To achieve the above object of the present invention, there is provided a contents information recording method comprising, when enciphered contents information is recorded from a first medium in which the enciphered contents information enciphered with a predetermined contents key and first enciphered key information obtained by enciphering the contents key with information about ID of the first medium as ID key are recorded, to a second medium: outputting the enciphered contents information and the first enciphered key information from the first medium to the second medium; on the second medium, recording the enciphered contents information in the second medium, deciphering the first enciphered key information according to information about the ID of the first medium obtained from the first medium, and recording second enciphered key information obtained by reenciphering the contents key with information about the ID of the second medium as the ID key in the second medium.

Further, to achieve the above object of the present invention, there is provided a contents information recording method comprising, when enciphered contents information is recorded from a first medium in which the enciphered contents information enciphered with a predetermined contents key and first enciphered key information obtained by enciphering the contents key with information about ID of the first medium as ID key are recorded, to a second medium: on the first medium, deciphering the first enciphered contents information, reenciphering the contents information with information about the ID of the second medium obtained from the second medium as the ID key so as to obtain second enciphered contents information and outputting the second enciphered contents information to the second medium; and, on the second medium, recording the enciphered contents information outputted from the first medium and the second enciphered key information in the second medium.

Further, to achieve the above object of the present invention, there is provided a contents information recording method wherein, when enciphered contents information is recorded from a first medium in which the enciphered contents information enciphered with a predetermined contents key and first enciphered key information obtained by enciphering the contents key with information about ID of the first medium as ID key are recorded, to a second medium, any one of the following methods {a} and {b} is selected; method {a}: outputting the enciphered contents information and the first enciphered key information to the second medium from the first medium; on the second medium, recording the enciphered contents information in the second medium, deciphering the first enciphered key information according to information about the ID of the first medium obtained from the first medium and recording second enciphered key information obtained by reenciphering the contents key with information about ID of the second medium as the ID key, method {b}: on the first medium, deciphering the first enciphered key information, reenciphering the contents key with information about the ID of the second medium obtained from the second medium as the ID key so as to obtain second enciphered key information and outputting the second enciphered contents information to the second medium; and, on the second medium, recording the enciphered contents information and the enciphered key information outputted from the first medium in the second medium.

According to a preferred embodiment of the present invention, the predetermined contents key is a common key or public key; the ID key for the first enciphered key information is a common key using the ID of the first medium as it is or a common key using information obtained by converting the ID of the first medium according to a predetermined function; and the ID key for the second enciphered key information is a common key using the ID of the second medium as it is or a common key using information obtained by converting the ID of the second medium according to a predetermined function.

To achieve the above object of the present invention, there is provided a contents information recording unit for recording contents information from a first medium in which first enciphered contents information obtained by enciphering the contents information with information about ID of the first medium as ID key is recorded, to a second medium, the unit comprising: a recording means for, on the second medium, deciphering the first enciphered contents information outputted from the first medium according to information about ID of the first medium outputted from the first medium and recording second enciphered contents information obtained by reenciphering the contents information with information about the ID of the second medium as the ID key in the second medium.

To achieve the above object of the present invention, there is provided a contents information recording unit for recording contents information from a first medium in which first enciphered contents information obtained by enciphering the contents information with information about ID of the first medium as ID key is recorded, to a second medium, the unit comprising: a recording means for, on the first medium, deciphering the first enciphered contents information, reenciphering the contents information with information about the ID of the second medium outputted from the second medium as the ID key so as to obtain second enciphered contents information, outputting the second enciphered contents information to the second medium and recording the second enciphered contents information in the second medium.

Further, to achieve the above object of the present invention, there is provided a contents information recording unit for recording contents information from a first medium in which first enciphered contents information obtained by enciphering the contents information with information about ID of the first medium as ID key is recorded, to a second medium, the unit comprising a selecting means for selecting any one of the following recording operations {a} and {b}; recording operation (a) of, on the second medium, deciphering the first enciphered contents information outputted from the first medium according to information about the first medium outputted from the first medium and recording second enciphered contents information obtained by reenciphering the contents information with information about the ID of the second medium as the ID key, in the second medium, recording operation {b} of, on the first medium, deciphering the first enciphered contents information, reenciphering the contents information with information about the ID of the second medium outputted from the second medium as the ID key so as to obtain second enciphered contents information, outputting the second enciphered contents information to the second medium and recording the second enciphered contents information in the second medium.

According to a preferred embodiment of the present invention, the ID key for the first enciphered key information is a common key using the ID of the first medium as it is or a common key using information obtained by converting the ID of the first medium according to a predetermined function; and the ID key for the second enciphered key information is a common key using the ID of the second medium as it is or a common key using information obtained by converting the ID of the second medium according to a predetermined function.

To achieve the above object of the present invention, there is provided a contents information recording unit for recording enciphered contents information from a first medium in which enciphered contents information enciphered with a predetermined key and first enciphered key information obtained by enciphering the contents key with information about ID of a first medium as ID key are recorded, to a second medium, the unit comprising: an enciphered key information recording means for, on the second medium, deciphering the first enciphered key information according to information about ID of the first medium outputted from the first medium and recording second enciphered key information obtained by reenciphering the contents key with information about ID of the second medium as ID key in the second medium.

Further, to achieve the above object of the present invention, there is provided a contents information recording unit for recording enciphered contents information from a first medium in which enciphered contents information enciphered with a predetermined key and first enciphered key information obtained by enciphering the contents key with information about ID of a first medium as ID key are recorded, to a second medium, the unit comprising: an enciphered key information recording means for, on the first medium, deciphering the first enciphered key information, reenciphering the contents key with information about ID of the second medium outputted from the second medium as ID key so as to obtain second enciphered key information, outputting the second enciphered key information to the second medium and recording the second enciphered key information in the second medium.

Further, to achieve the above object, there is provided a contents information recording unit for recording enciphered contents information from a first medium in which the enciphered contents information enciphered with a predetermined contents key and first enciphered key information obtained by enciphering the contents key with information about ID of the first medium are recorded, to a second medium, the unit comprising a selecting means for selecting any one of the following recording operations {a} and {b}: recording operation {a} of, on the second medium, deciphering the first enciphered key information according to information about ID of the first medium outputted from the first medium and recording second enciphered key information obtained by reenciphering the contents key with information about the ID of the second medium as the ID key in the second medium, recording operation {b} of, on the first medium, deciphering the first enciphered key information, reenciphering the contents key with information about the ID of the second medium outputted from the second medium as the ID key so as to obtain second enciphered key information, outputting the second enciphered key information to the second medium and recording the second enciphered key information in the second medium.

According to a preferred embodiment of the present invention, the predetermined contents key is a common key or public key; the ID key for the first enciphered key information is a common key using the ID of the first medium as it is or a common key using information obtained by converting the ID of the first medium with a predetermined function; and the ID key for the second enciphered key information is a common key using the ID of the second medium as it is or a common key using information obtained by converting the ID of the second medium with a predetermined function.

The nature, principle and utility of the invention will become more apparent from the following detailed description when read in conjunction with the accompanying drawings.

### BRIEF DESCRIPTION OF THE DRAWINGS

In the accompanying drawings:
Fig.1 is a diagram for explaining encryption for distributing data for use in an embodiment of the present invention;
Fig.2 is a diagram showing a structure example of the embodiment;
Fig.3 is a diagram for explaining functions of the embodiment;
Fig.4 is a diagram for explaining functions of the embodiment;
Fig.5 is a diagram of data structure in media of the embodiment; and
Fig.6 is a block diagram showing a detailed structure of the embodiment.

### DESCRIPTION OF THE PREFERRED EMBODIMENTS

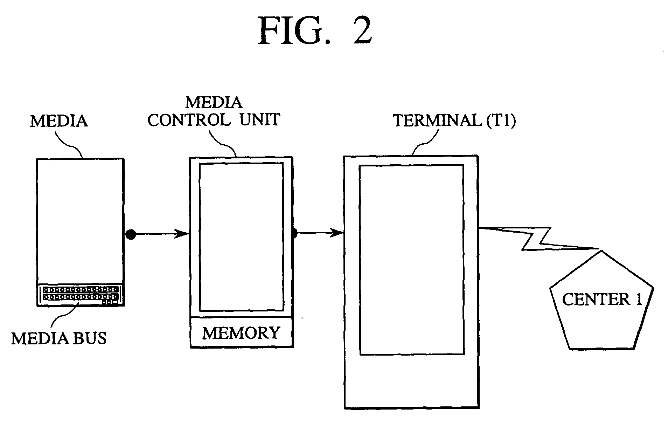

First, a structure of the preferred embodiment of the present invention will be described with reference to Fig. 2. An medium has an ID inherent of itself and can be set in a media control unit. The media mentioned here needs to enable recording and reproduction and include a solid memory, disc, tape and the like as long as its inherent ID can be set therein. In this case, the ID information must have a predetermined tamper resistance. That is, it is desirable that the ID and a key necessary for encryption are in a storage condition difficult to read or rewrite illegally.

The simplest example is a memory type. By using it, a memory card, from which the ID or enciphered key information cannot be extracted unless a predetermined memory control unit is used, can be produced easily with safety through a predetermined memory control unit. An inherent ID is recorded in each memory card at the time of production in plant. Alternatively, when the memory card is published by a publicizing unit, an ID inherent of that memory is recorded in EEPROM or the like and the EEPROM is buried by sealing with resin or the like. As a result, user corresponding key information cannot be changed after that. That is, illegal modification is prevented. The media has a media bus allowing only part of data to be copied between different media.

A media control unit, in which a medium is set and which is connected to a terminal of PC or other specialized device, has a function as an interface between the medium and terminal, and further, functions for enciphering and deciphering of data under a predetermined ID. The media control unit has tamper resistance inhibiting illegal access to inside of the memory from the terminal. The terminal is connected to a center (distribution center) disposed outside for distributing contents information and distributes the contents data after predetermined procedures for accounting, certification and the like are finished. Connecting means to the center includes ISDN, broadcasting, cable TV and radio as well as network system like internet.

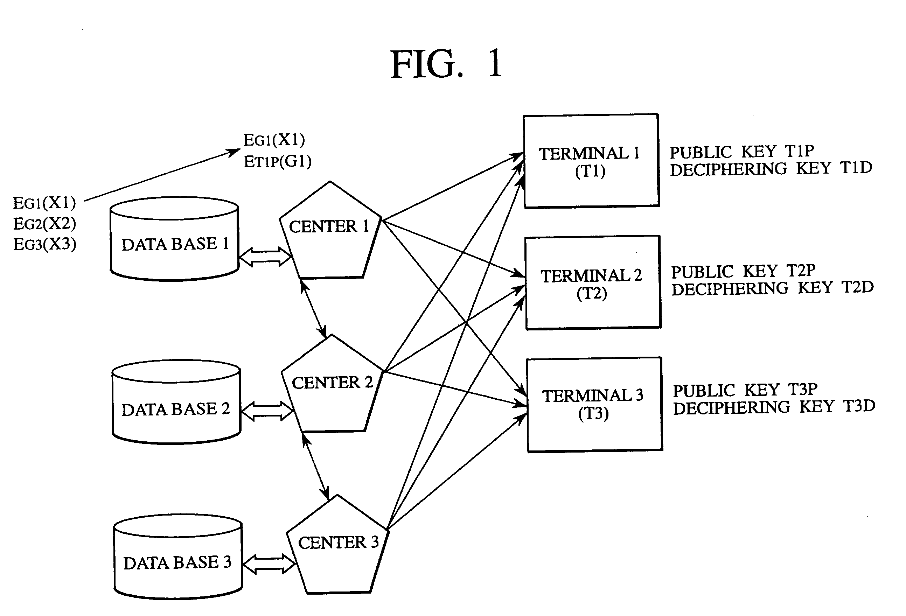

The contents information is enciphered with a basically different key (contents key) depending on the contents. After compressed in a predetermined compression system like MPEG, the contents are subject to encryption based on DES (data encryption standard) or the like. For example, in case of the DES, the enciphering key is about 64 bits. Fig. 1 shows a relation between the data base, center and terminal. The contents information, for example, contents X1 are enciphered with an enciphering key G1 in data base installed in the center and other contents X2 are enciphered with an enciphering key G2.

A plurality of terminals are connected to this center via network. Transmission to the terminal is carried out in encryption by public key system considering the security. Here, assuming that the public key of the terminal 1 (T1) is T1P and the deciphering key is T1D, contents X1 managed by the data base 1 are enciphered with enciphering key G1 so as to produce enciphered contents information called E_{G1}(X1). The enciphering key G1 is enciphered with the public key T1P of the terminal T1 to transmit to the terminal T1 so that this key is converted to enciphered key information E_{T1P}(G1). Then, both the enciphered contents information E_{G1}(X1) and enciphered key information E_{T1P}(G1) are sent to the terminal 1 (T1).

To reproduce the contents information at the terminal 1, the enciphered key information E_{T1P}(G1) is deciphered with the deciphering key T1D of the terminal 1 to obtain the enciphering key G1. Then, the enciphered contents information E_{G1}(X1) is deciphered with that enciphering key G1 to obtain contents X1 and then MPEG deciphering or the like is carried out to reproduce the original information. However, in a description made in this specification, it is assumed that transmitted data is not reproduced but recorded in media connected to the terminal. Although data transmission up to the terminal with the public key has been described here, the present invention can support not only the common key system but also other key system.

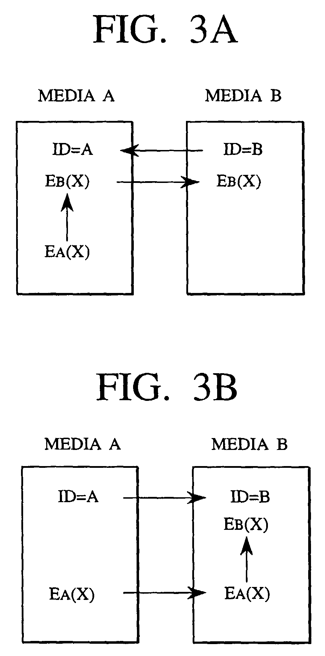

Then, a sending/receiving function of the contents information and key information of the present invention will be described with reference to Figs.3A, 3B, 4B, 5.

First, a case in which contents data is received by medium A (first medium) of the terminal T1 from the distribution center will be described. First of all, medium A is set in the media control unit. Then, the media control unit is set in the terminal T1 and "data recording mode" is turned ON. Predetermined processings for accounting, certification and the like are carried out. When the processings are terminated, the contents data is distributed from the center to the terminal in an enciphered state with the enciphering key G1 from the center.

That is, the enciphered contents information E_{G1}(X1) in which the contents X are enciphered with the enciphering key G1 is sent. At the same time, to send the enciphering key G1 to the terminal T1, enciphered key information E_{T1P}(G1), in which the enciphering key G1 is enciphered with the public key T1P of the terminal T1, is sent to the terminal T1. Because a key for use in deciphering at the terminal is deciphering key T1D, this enciphered key information E_{T1P}(G1) can be deciphered with the deciphering key T1D. A condition which can be deciphered with this deciphering key T1D is called E_{T1D}(G1) instead of E_{T1P}(G1). At the terminal, this enciphered key information E_{T1D}(G1) is deciphered with the deciphering key T1D once to obtain the enciphering key G1. The enciphered contents information E_{G1}(X) is deciphered with the deciphered enciphering key G1 so as to obtain the contents data X and this contents data X is transmitted to the medium A.

A method for enciphering the contents in the media with a media ID will be described with reference to Fig.3.

When the media control unit receives this contents data X, it reencipheres the contents data X with ID of the medium A as an ID key. The first enciphered contents information E_{A}(X) is recorded in the medium A. Because when this enciphered contents data is copied into the medium B, ID = B in the medium B, this E_{A}(X) cannot be reproduced. However, there is a problem in security in deciphering the contents data in the medium A and transmitting the live signal data to the medium B in a condition which can be reproduced.

Thus, as shown in Fig.3A, ID = B of copy destination media is read at the medium A and the contents data enciphered with ID = A as an ID key is deciphered at the medium A. ID = B of copy destination is reenciphered as an ID key and transmitted to the medium B as a second enciphered contents information E_{B}(X).

Alternatively, as shown in Fig.3B, the contents data E_{A}(X) enciphered with ID = A is transmitted to the medium B. The medium B reads ID of the medium A, deciphers the contents data enciphered with ID = A, reencipheres it with ID = B and records as E_{B}(X). As a result, because the contents data is transmitted in a condition enciphered by any of these IDs, the security is ensured.

Meanwhile, it is permissible to so construct a recording unit that any of the methods shown in Fig.3A and Fig.3B can be selected arbitrarily.

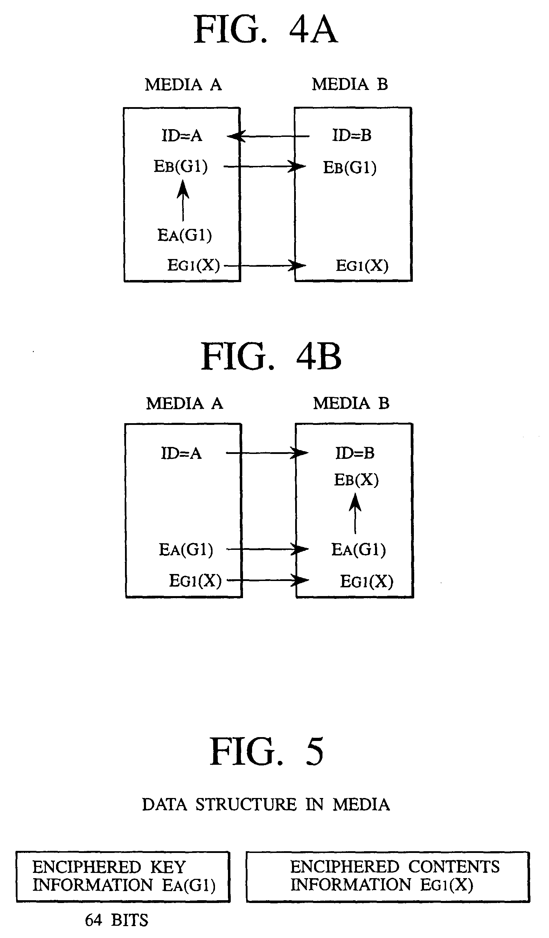

Next, a case in which the enciphered contents information enciphered with a predetermined contents key (enciphering key) is recorded in the medium A and medium B and then, that contents key (enciphering key) is enciphered with information about the medium A and medium B as an ID key and recorded in the medium A and medium B will be described with reference to Fig.4A and 4B.

First, a case in which the contents data is received by the medium A (first medium) at the terminal T1 from the distribution center will be described. First, a case in which contents data is received by medium A (first medium) of the terminal T1 from the distribution center will be described. First of all, medium A is set in the media control unit. Then, the media control unit is set in the terminal T1 and "data recording mode" is turned ON. Predetermined processings for accounting, certification and the like are carried out. When the processings are terminated, the contents data is distributed to the terminal in an enciphered state with the enciphering key G1 from the center.

That is, the enciphered contents information E_{G1}(X1) in which the contents X is enciphered with the enciphering key G1 is sent. At the same time, to send the enciphering key G1 to the terminal T1, enciphered key information E_{T1P}(G1), in which the enciphering key G1 is enciphered with the public key T1P of the terminal T1, is sent to the terminal T1. Because a key for use in deciphering at the terminal is deciphering key T1D, this enciphered key information E_{T1P}(G1) can be deciphered with the deciphering key T1D. A condition which can be deciphered with this deciphering key T1D is called E_{T1D}(G1) instead of E_{T1P}(G1). At the terminal, this enciphered key information E_{T1D}(G1) is deciphered with the deciphering key T1D once to obtain the enciphering key G1.

The media control unit receives the enciphered contents information E_{G1}(X1) and enciphering key G1 from the terminal and records the enciphered contents information E_{G1}(X) in the medium A. On the other hand, it recognizes an ID of the set medium and reenciphers this enciphering key G1 with a value A which is an ID inherent of the medium A so as to obtain a first enciphered key information E_{A}(G1). Then, this information is recorded in the medium A. Fig.5 shows an example of data structure at this time. 64-bit enciphered key information is recorded in the header of the enciphered contents information. This structure does not always have to be integrated, however may be separated if the separated pair can be controlled.

Even when the first enciphered key information E_{A}(G1) is copied to the medium B as it is, this E_{A}(G1) cannot be deciphered because the ID of the medium B is B. Then, as shown in Fig.4A, the ID = B of the copy destination medium is read on the medium A, the first enciphered key information E_{A}(G1) enciphered with ID = A on the medium A is deciphered and this is reenciphered with ID = B of the copy destination so as to obtain a second enciphered key information E_{B}(G1). Then, this second enciphered key information E_{G}(G1) is sent to the medium B with the enciphered contents information E_{G1}(X). The sent enciphered contents information E_{G1}(X) and second enciphered key information E_{B}(G1) are stored in the medium B.

Alternatively, the first enciphered key information E_{A}(G1) enciphered with ID = A is transmitted to the medium B with the enciphered contents information E_{G1}(X) as shown in Fig.4B. On the medium B, the ID of the medium A of the copy destination is read and then, the first enciphered key information E_{A}(G1) enciphered with ID = A is deciphered and then, reenciphered with ID = B so as to obtain the second enciphered key information E_{B}(G1). Then, this second enciphered information E_{B}(G1) is recorded.

As described above, not only the contents information is transmitted in the enciphered condition E_{G1}(X) but also the enciphering key G1 is also transmitted in the enciphered condition (E_{A}(G1) or E_{B}(G1)) with media ID. Thus, the security of data is ensured.

When the volume of the contents data X is large, as shown in Fig.4A and 4B, enciphering the enciphering key (contents key) G1 of the enciphered contents information E_{G1}(X) with information about media ID or terminal ID as the ID key (method using E_{A}(G1) or E_{B}(G1)) enables to handle the contents data rapidly because it can be copied by deciphering or enciphering only the key information.

It is permissible to so construct that any one of the methods shown in Figs.4A and 4B can be selected arbitrarily.

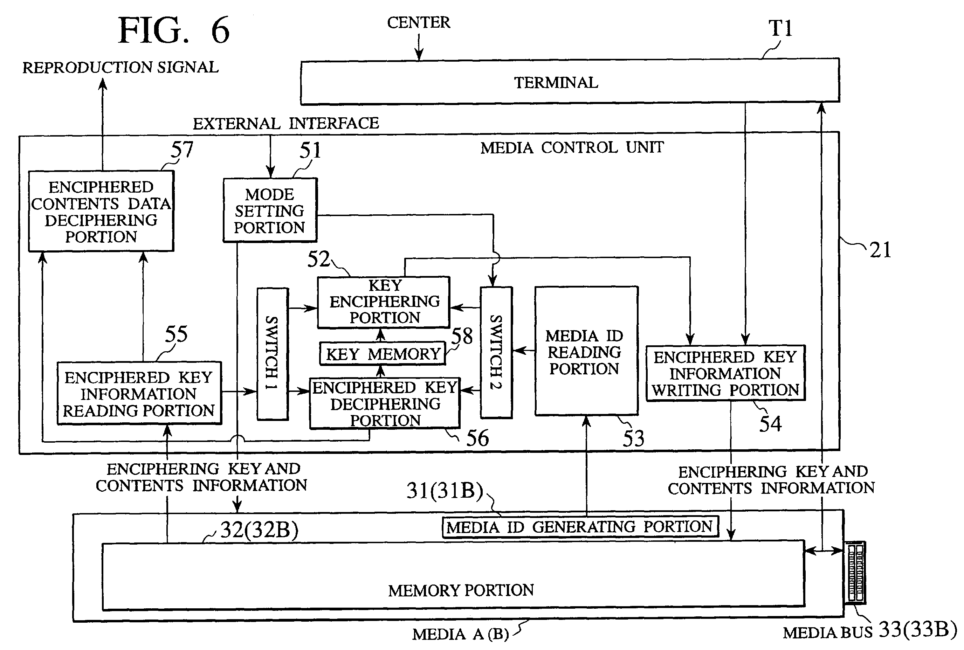

Next, a block diagram of an embodiment of the contents information recording unit of the present invention will be described with reference to Fig.6. This block diagram indicates a method (method using E_{A}(G1) or E_{B}(G1)) for enciphering the enciphering key (contents key) G1 with information about the media ID or terminal ID as the ID key. This block diagram will be described about a case indicated in Fig.4A.

First, a case in which the contents data is received by the medium A from the distribution center will be described. First, the medium A is set in the media control unit 21. The media control unit 21 is set to the terminal T1 and "data recording mode" is set in a mode setting portion 51 of the media control unit 21 from an external interface. After predetermined procedures for accounting, certification and the like are terminated, contents data X enciphered with a predetermined enciphering key G1 is distributed from the center to the terminal T1. In case of "data recording mode", the mode setting portion 51 connect the switches 1 and 2 to a key enciphering portion 52.

The enciphered contents information E_{G1}(X) and the enciphered E_{T1P}(G1) obtained by enciphering the enciphering key G1 using a public key T1P of the terminal T1 in order to send the enciphering key G1 to T1 are sent from the center. Because the key for use in deciphering at the terminal T1 is the deciphering key T1D, this enciphered key information T_{1P}(G1) can be deciphered. A condition which can be deciphered with this deciphering key is expressed as E_{T1D}(G1) instead of E_{T1P}(G1). This enciphered key information E_{T1D}(G1) is deciphered once with T1D at the terminal T1.

The media control unit receives the enciphered contents information E_{G1}(X1) and enciphering key G1 and records the enciphered contents information E_{G1}(X1) in the medium A. On the other hand, ID of the set medium A is recognized by the media ID reading portion 53 and the enciphering key G1 is enciphered with ID = A by the key enciphering portion 52. The enciphered key information E_{A}(G1) is sent to the enciphered key information writing portion 54. The enciphered key information writing portion 54 records the enciphered key information in header of 64 bits of the enciphered contents information E_{G1}(X) recorded in the medium A.

Next, a case in which the enciphered contents information E_{G1}(X) recorded in the medium A is reproduced will be described. The medium A is set in the media control unit 21 and "data reproduction mode" is set in the mode setting portion 51 of the media control unit 21 from the external interface. A signal generated by the media ID generating portion 31 of the medium A is detected as media ID (A) by the media ID reading portion 53 of the media control unit 21 and sent to an enciphered key deciphering portion 56.

The media control unit 21 reads the enciphered contents information E_{G1}(X) from the memory portion 32 of the medium A and sends it to an enciphered key information reading portion 55. The enciphered key information reading portion 55 reads enciphered key information of 64 bits located at the head and sends the enciphered key information E_{A}(G1) to the enciphered key deciphering portion 56 through the switch 1. In case of "data reproduction mode", the switch 1 is changed to the side of the enciphered key deciphering portion 56 by the mode setting portion 51.

The enciphered key deciphering portion 56 deciphers the enciphered key information E_{A}(G1) using an inputted media ID (A). The deciphered enciphering key G1 is sent to an enciphered contents data deciphering portion 57. Enciphered contents data whose header is removed by the enciphered key information reading portion 55 is sent to the enciphered contents data deciphering portion 57. The enciphered contents data deciphering portion 57 deciphers the inputted enciphered contents data E_{G1}(X) with the enciphering key G1 and outputs as reproduction data.

Next, a case in which the contents data is copied from the medium A to the medium B will be described. When the enciphered contents information E_{G1}(X) is copied from the copy source medium A in which the contents are recorded to the copy destination medium B, first, the medium A is set in the media control unit 21. Then, "data copy output mode" is set in the mode setting portion 51 of the media control unit 21 from the external interface.

A signal generated by the media ID generating portion 31 of the medium A is detected as media ID (A) by the media ID reading portion 23 of the media control unit 21 and sent to the enciphered key deciphering portion 56. When "data copy output mode" is set in the mode setting portion 51, the switches 1, 2 are changed so as to be connected to the enciphered key deciphering portion 56.

The enciphered contents information E_{G1}(X) recorded in the medium A is sent to the enciphered contents information reading portion 55, where the enciphered key information E_{A}(G1) of 64 bits of the header is read. The read enciphered key information E_{A}(G1) is sent to the enciphered key deciphering portion 56. The enciphered key deciphering portion 56 deciphers the enciphered key information E_{A}(G1) based on the inputted ID(A) so as to obtain the enciphering key G1 and then records it in the key memory 58 temporarily.

On the other hand, the enciphered contents data E_{G1}(X) is stored in a data moving region of the memory portion 32 of the medium A and transmitted to the medium B connected to the media bus 33 rapidly through the media bus 33. This media bus connects the medium A to the medium B physically so as to transmit data. Because only the enciphered contents data can pass through this media bus, the safety of the transmitted data is high.

Next, the medium B is set in the media control unit 21. The media ID(B) is detected by the media ID reading portion 53 of the media control unit 21. When "data copy input mode" is set in the mode setting portion 51, the switches 1, 2 are changed so as to be connected to the key enciphering portion 52. The key enciphering portion 52 reads out the enciphering key G1 from the key memory 58 and the enciphering key G1 is enciphered by using the ID(B) inputted from the media ID reading portion 53 so as to obtain E_{B}(G1). The enciphered key information E_{B}(G1) is sent to the enciphered key information writing portion 54. The enciphered key information E_{B}(G1) is recorded in the memory portion 32B of the medium B.

A case in which the enciphered contents information E_{G1}(X) recorded in the medium B is reproduced will be described. This is the same as when the enciphered contents information E_{G1}(X) recorded in the medium A is reproduced. That is, the medium B is set in the media control unit 21 and "data reproduction mode" is set in the mode setting portion 51 of the media control unit 21 from the external interface. A signal generated by the media ID generating portion 31B of the medium B is detected as media ID(B) by the media ID reading portion 53 of the media control unit 21 and sent to the enciphered key deciphering portion 56.

The media control unit 21 reads out the enciphered contents information E_{G1}(X) from the memory portion 32B of the medium B and sends it to the enciphered key information reading portion 55. The enciphered key information reading portion 55 reads the enciphered key information of 64 bits located at the head and sends the enciphered key information E_{B}(G1) to the enciphered key deciphering portion 56 through the switch 1. In case of "data reproduction mode", the switch 1 is changed to the side of the enciphered key deciphering portion 56 by the mode setting portion 51.

The enciphered key deciphering portion 56 deciphers the enciphered key information E_{B}(G1) using the inputted media ID(B). The deciphered enciphering key G1 is sent to the enciphered contents data deciphering portion 57. The enciphered contents data whose header is removed by the enciphered key information reading portion 55 is sent to the enciphered contents data deciphering portion 57. The enciphered contents data deciphering portion 57 deciphers the inputted enciphered contents data E_{G1}(X) by the enciphering key G1 and outputs the obtained contents data X as the reproduction data.

As described above, not only the contents data is transmitted in the enciphered condition E_{G1}(X) but also the enciphering key G1 is also transmitted in the enciphered condition (E_{B}(G1)) with medium B ID, the security of the recording unit of this embodiment is ensured.

According to the above described embodiment, a processing for deciphering the enciphering key G1 and reenciphering it with the ID of the medium B is carried out on the transmission side (medium A). Therefore, the media control unit specialized for transmission do not require the key enciphering portion 52 and switches 1, 2, so that a system allowing only a limited user to transmit can be constructed.

Meanwhile, in case where the contents data is not copied from the medium A to the medium B but transferred, at least one of the enciphered key information E_{A}(G1) and enciphered contents data E_{G1}(X) is deleted from the medium A.

In the recording unit which achieves the method shown in Fig.3A, the first enciphered contents information E_{A}(X) is deciphered on the medium A and the contents information is reenciphered with ID = B of the medium B outputted from the medium B as the ID key so as to obtain the second enciphered contents information E_{B}(X). Then, the second enciphered contents information E_{B}(X) is outputted to the medium B and the second enciphered contents information E_{B}(X) is recorded in the medium B.

According to the present invention, the contents data recorded in a medium can be transferred or copied between different users while illegal transfer and duplication thereof are prevented, so that user can obtain the contents data without connecting to an accounting control center, data control center or the like.

Further, according to the present invention, it is possible to provide a system allowing user to transfer and duplicate data between different media when he has such plural media.

Further, according to the present invention, it is possible to transfer and duplicate the contents data always in an enciphered high security condition.

It should be understood that many modifications and adaptations of the invention will become apparent to those skilled in the art and it is intended to encompass such obvious modifications and changes in the scope of the claims appended hereto.

## Claims

1. A contents information recording method comprising, when contents information is recorded from a first medium, in which first enciphered contents information is recorded, said first enciphered contents information being obtained by enciphering the contents information with information about ID of the first medium as an ID key, to a second medium:
outputting said first enciphered contents information from said first medium to said second medium; and
on said second medium, deciphering said first enciphered contents information according to information about ID of said first medium obtained from said first medium, and recording second enciphered contents information, which is obtained by reenciphering said contents information with information about the ID of said second medium as an ID key, in said second medium.

2. A contents information recording method comprising, when contents information is recorded from a first medium, in which first enciphered contents information is recorded, said first enciphered contents information being obtained by enciphering the contents information with information about ID of the first medium as an ID key, to a second medium:
on said first medium, deciphering said first enciphered contents information, reenciphering said contents information with information about the ID of said second medium obtained from said second medium as the ID key so as to obtain second enciphered contents information and outputting the second enciphered contents information to said second medium; and
on said second medium, recording said second enciphered contents information into said second medium.

3. A contents information recording method wherein, when contents information is recorded from a first medium, in which first enciphered contents information is recorded, said first enciphered contents information being obtained by enciphering the contents information with information about ID of the first medium as an ID key, to a second medium, any one of the following methods {a} and {b} is selected;
method {a}:
outputting said first enciphered contents information from said first medium to said second medium; and
on said second medium, deciphering said first enciphered contents information according to information about ID of said first medium obtained from said first medium, and recording second enciphered contents information, which is obtained by reenciphering said contents information with information about the ID of said second medium as an ID key, in said second medium,
method {b}:
on said first medium, deciphering said first enciphered contents information, reenciphering said contents information with information about the ID of said second medium obtained from said second medium as the ID key so as to obtain second enciphered contents information and outputting the second enciphered contents information to said second medium; and
on said second medium, recording said second enciphered contents information into said second medium.

4. A contents information recording method according to claim 1 wherein
the ID key for said first enciphered contents information is a common key using the ID of said first medium as it is or a common key using information obtained by converting the ID of said first medium according to a predetermined function; and
the ID key for said second enciphered contents information is a common key using the ID of said second medium as it is or a common key using information obtained by converting the ID of said second medium according to a predetermined function.

5. A contents information recording method comprising, when enciphered contents information is recorded from a first medium in which said enciphered contents information enciphered with a predetermined contents key and first enciphered key information obtained by enciphering said contents key with information about ID of the first medium as ID key are recorded, to a second medium:
outputting said enciphered contents information and said first enciphered key information from said first medium to said second medium;
on said second medium, recording said enciphered contents information in said second medium, deciphering said first enciphered key information according to information about the ID of said first medium obtained from said first medium, and recording second enciphered key information obtained by reenciphering said contents key with information about the ID of said second medium as the ID key in said second medium.

6. A contents information recording method comprising, when enciphered contents information is recorded from a first medium in which said enciphered contents information enciphered with a predetermined contents key and first enciphered key information obtained by enciphering said contents key with information about ID of the first medium as ID key are recorded, to a second medium:
on said first medium, deciphering said first enciphered contents information, reenciphering said contents information with information about the ID of said second medium obtained from said second medium as the ID key so as to obtain second enciphered contents information and outputting the second enciphered contents information to said second medium; and
on said second medium, recording said enciphered contents information outputted from said first medium and said second enciphered key information in said second medium.

7. A contents information recording method wherein, when enciphered contents information is recorded from a first medium in which said enciphered contents information enciphered with a predetermined contents key and first enciphered key information obtained by enciphering said contents key with information about ID of the first medium as ID key are recorded, to a second medium, any one of the following methods {a} and {b} is selected;
method [a]:
outputting said enciphered contents information and said first enciphered key information to said second medium from said first medium;
on said second medium, recording said enciphered contents information in said second medium, deciphering said first enciphered key information according to information about the ID of said first medium obtained from said first medium and recording second enciphered key information obtained by reenciphering said contents key with information about ID of said second medium as the ID key,
method [b]:
on said first medium, deciphering said first enciphered key information, reenciphering said contents key with information about the ID of said second medium obtained from said second medium as the ID key so as to obtain second enciphered key information and outputting said second enciphered contents information to said second medium; and
on said second medium, recording said enciphered contents information and said enciphered key information outputted from said first medium in said second medium.

8. A contents information recording method according to claim 5 wherein
said predetermined contents key is a common key or public key;
the ID key for said first enciphered key information is a common key using the ID of said first medium as it is or a common key using information obtained by converting the ID of said first medium according to a predetermined function; and
the ID key for said second enciphered key information is a common key using the ID of said second medium as it is or a common key using information obtained by converting the ID of said second medium according to a predetermined function.

9. A contents information recording unit for recording contents information from a first medium in which first enciphered contents information obtained by enciphering the contents information with information about ID of the first medium as ID key is recorded, to a second medium, said unit comprising:
a recording means for, on said second medium, deciphering said first enciphered contents information outputted from said first medium according to information about ID of said first medium outputted from said first medium and recording second enciphered contents information obtained by reenciphering said contents information with information about the ID of said second medium as the ID key in said second medium.

10. A contents information recording unit for recording contents information from a first medium in which first enciphered contents information obtained by enciphering the contents information with information about ID of the first medium as ID key is recorded, to a second medium, said unit comprising:
a recording means for, on said first medium, deciphering said first enciphered contents information, reenciphering said contents information with information about the ID of said second medium outputted from said second medium as the ID key so as to obtain second enciphered contents information, outputting the second enciphered contents information to said second medium and recording said second enciphered contents information in said second medium.

11. A contents information recording unit for recording contents information from a first medium in which first enciphered contents information obtained by enciphering the contents information with information about ID of the first medium as ID key is recorded, to a second medium, said unit comprising a selecting means for selecting any one of the following recording operations {a} and {b};
recording operation {a} of
on said second medium, deciphering said first enciphered contents information outputted from said first medium according to information about said first medium outputted from said first medium and recording second enciphered contents information obtained by reenciphering said contents information with information about the ID of said second medium as the ID key, in said second medium,
recording operation {b} of
on said first medium, deciphering said first enciphered contents information, reenciphering said contents information with information about the ID of said second medium outputted from said second medium as the ID key so as to obtain second enciphered contents information, outputting the second enciphered contents information to said second medium and recording said second enciphered contents information in said second medium.

12. A contents information recording unit according to claim 9 wherein
the ID key for said first enciphered key information is a common key using the ID of said first medium as it is or a common key using information obtained by converting the ID of said first medium according to a predetermined function; and
the ID key for said second enciphered key information is a common key using the ID of said second medium as it is or a common key using information obtained by converting the ID of said second medium according to a predetermined function.

13. A contents information recording unit for recording enciphered contents information from a first medium in which enciphered contents information enciphered with a predetermined key and first enciphered key information obtained by enciphering said contents key with information about ID of a first medium as ID key are recorded, to a second medium, said unit comprising:
an enciphered key information recording means for, on said second medium, deciphering said first enciphered key information according to information about ID of said first medium outputted from said first medium and recording second enciphered key information obtained by reenciphering said contents key with information about ID of said second medium as ID key in said second medium.

14. A contents information recording unit for recording enciphered contents information from a first medium in which enciphered contents information enciphered with a predetermined key and first enciphered key information obtained by enciphering said contents key with information about ID of a first medium as ID key are recorded, to a second medium, said unit comprising:
an enciphered key information recording means for, on said first medium, deciphering said first enciphered key information, reenciphering said contents key with information about ID of said second medium outputted from said second medium as ID key so as to obtain second enciphered key information, outputting the second enciphered key information to said second medium and recording said second enciphered key information in said second medium.

15. A contents information recording unit for recording enciphered contents information from a first medium in which the enciphered contents information enciphered with a predetermined contents key and first enciphered key information obtained by enciphering the contents key with information about ID of the first medium are recorded, to a second medium, said unit comprising a selecting means for selecting any one of the following recording operations {a} and {b}:
recording operation {a} of
on said second medium, deciphering said first enciphered key information according to information about ID of said first medium outputted from said first medium and recording second enciphered key information obtained by reenciphering said contents key with information about the ID of said second medium as the ID key in said second medium,
recording operation {b} of
on said first medium, deciphering said first enciphered key information, reenciphering said contents key with information about the ID of said second medium outputted from said second medium as the ID key so as to obtain second enciphered key information, outputting the second enciphered key information to said second medium and recording said second enciphered key information in said second medium.

16. A contents information recording unit according to claim 13 wherein
said predetermined contents key is a common key or public key;
the ID key for said first enciphered key information is a common key using the ID of said first medium as it is or a common key using information obtained by converting the ID of said first medium with a predetermined function; and
the ID key for said second enciphered key information is a common key using the ID of said second medium as it is or a common key using information obtained by converting the ID of said second medium with a predetermined function.
